Europäisches Patentamt

European Patent Office

Office européen des brevets

(11) Numéro de publication: **0 172 104**
**B1**

(12) # FASCICULE DE BREVET EUROPÉEN

(45) Date de publication du fascicule du brevet:
**14.10.87**

(51) Int. Cl.⁴: **B 64 C 27/14**

(21) Numéro de dépôt: **85401593.0**

(22) Date de dépôt: **05.08.85**

(54) **Boîte de transmission principale pour hélicoptère bimoteur.**

(30) Priorité: **06.08.84 FR 8412400**

(43) Date de publication de la demande:
**19.02.86 Bulletin 86/8**

(45) Mention de la délivrance du brevet:
**14.10.87 Bulletin 87/42**

(84) Etats contractants désignés:
**DE GB IT**

(56) Documents cité:
**EP-A-0 091 744**
**FR-A-2 261 179**
**US-A-3 129 608**

(73) Titulaire: **AEROSPATIALE Société Nationale Industrielle, 37, Boulevard de Montmorency, F-75781 Paris Cédex 16 (FR)**

(72) Inventeur: **Mouille, René Louis, "Villa La Pinède" Chemin du Moulin de Testas, F-13100 Aix en Provence (FR)**

(74) Mandataire: **Lepeudry- Gautherat, Thérèse, CABINET LEPEUDRY 6 rue du Faubourg St-Honoré, F-75008 Paris (FR)**

## Description

La présente invention concerne des boîtes de transmission principale pour les hélicoptères bimoteurs, et elle se rapporte plus précisément à une boîte de transmission principale comprenant deux chaînes cinématiques principales en liaison chacune avec l'un des deux moteurs et accouplées à la sortie pour additionner la puissance en provenance des deux moteurs et la transmettre à l'arbre rotor principal, directement ou indirectement à travers un ou plusieurs étages de réduction supplémentaire(s), mais accouplées également dès l'entrée de telle sorte que, en cas de panne de moteur, la puissance délivrée par le moteur restant poussé jusqu'à la puissance maximale d'urgence, soit répartie entre les deux chaînes cinématiques principales.

La fonction remplie par une boîte de transmission principale d'hélicoptère est d'assurer la transmission de la puissance délivrée par le ou les moteurs aux rotors, qui sont, le plus souvent, un rotor principal ou de sustentation et un rotor anti-couple ou rotor arrière de l'hélicoptère. La puissance du ou des moteurs est introduite par l'intermédiaire d'arbres, en général très courts, dans la boîte de transmission principale, qui présente la structure d'un groupe réducteur central. Celui-ci transmet la majeure partie de la puissance totale qu'il reçoit au rotor principal et dérive une partie de la puissance totale vers le rotor anti-couple au moyen d'une chaîne cinématique auxiliaire, comportant des trains d'engrenages, des arbres de transmission et au moins une boîte de transmission auxiliaire.

Certains hélicoptères bimoteurs de conception récente sont équipés de boîtes de transmission principale comportant en général trois étages de réduction, dont l'un est constitué d'un train d'engrenages côniques et dont les deux autres sont constitués de trains d'engrenages cylindriques. Le dernier étage, appelé étage de sortie de la boîte, est toujours constitué d'un train d'engrenages cylindriques à grand rapport de réduction, comprenant un pignon central de grand diamètre, appelé également roue centrale, qui est directement solidarisée en rotation à l'arbre d'entraînement du rotor de sustentation et sur laquelle s'effectue l'addition de la puissance délivrée par les deux moteurs.

Dans une boîte de transmission principale présentant une telle architecture générale, l'axe du dernier pignon de l'ensemble de la chaîne de transmission, et qui est la roue centrale d'addition, est confondu avec l'axe du rotor de sustentation. Une telle disposition se prête favorablement à l'encastrement de l'arbre d'entraînement du rotor de sustentation sur les roulements sur lesquels la roue centrale d'addition est montée en rotation. Cette disposition autorise également une réduction de la hauteur de l'hélicoptère car, habituellement, l'étage de sortie est agencé dans un carter cônique situé au-dessus de la boîte de transmission principale. Un autre avantage d'une telle disposition est que les commandes du rotor de sustentation peuvent être intégrées dans la boîte de transmission principale du fait de la grande dimension de la roue centrale d'addition, et, pour cette même raison, le passage d'éventuels conduits ou conducteurs de grande dimension à destination de la tête du rotor de sustentation, par exemple ceux d'un vissur de mât rotor, est grandement facilité.

Cependant, une telle réalisation présente un inconvénient majeur pour un aéronef tel qu'un hélicoptère, car elle est très pénalisante sur le plan du poids. En effet, lorsque les deux moteurs fonctionnent, le couple transmis à l'arbre d'entraînement du rotor de sustentation passe par deux paires de dentures, tandis que ce couple ne passe que par une seule paire de dentures lorsqu'un seul moteur fonctionne. Le dimensionnement des dentures, afin qu'elles supportent les charges correspondantes, conduit à réaliser et à utiliser des pignons de plus grande taille en largeur et en épaisseur, donc plus lourds. Il convient d'ailleurs de noter que le dimensionnement des dentures est d'autant plus défavorable que, dans le cas d'un vol sur un moteur, l'autre étant en panne, les pignons doivent transmettre la puissance maximale d'urgence du moteur restant en fonctionnement, depuis l'entrée de la boîte de transmission principale, par laquelle cette dernière est raccordée à l'arbre de sortie du moteur en fonctionnement, jusqu'à la roue d'addition. Cette puissance maximale d'urgence est en général de 50 à 60 % environ plus élevée que la puissance maximale continue de chaque moteur qui est prise en considération pour le fonctionnement sur les deux moteurs.

Pour cette raison, il a déjà été proposé de nouveaux systèmes de transmission de couple entre les moteurs d'un hélicoptère et les rotors de ce dernier, qui permettent d'éliminer une partie substantielle du supplément de masse que présentent les réalisations évoquées ci-dessus, du fait que chacune des chaînes cinématiques de transmission reliant l'un des moteurs à la roue d'addition doit être dimensionnée en fonction de la puissance maximale d'urgence de ce moteur.

En particulier, le brevet français n° 2 261 179 décrit un tel système de transmission, comprenant, pour un hélicoptère bimoteur:

- deux chaînes cinématiques principales, comportant chacune des trains d'engrenages et des arbres de transmission, dont l'un présente une certaine souplesse en torsion, et destinées chacune à transmettre le couple disponible sur l'arbre de sortie de l'un des deux moteurs à un arbre d'entraînement sensiblement vertical d'un rotor de sustentation de l'hélicoptère, chaque chaîne principale comprenant:

- un étage d'entrée comportant un arbre d'entrée accouplé au moteur correspondant, et entraîné à partir de ce dernier par l'intermédiaire d'une roue libre et de l'arbre de sortie du moteur, et sensiblement aligné avec ledit arbre de sortie du moteur,

- un premier étage réducteur, constitué par un train d'engrenages côniques comprenant un premier pignon cônique entraîné à partir de l'arbre d'entrée et en prise avec un second pignon cônique solidaire d'un premier arbre de transmission sensiblement vertical et

- un second étage réducteur, constitué par un train d'engrenages cylindriques comprenant un pignon terminal solidaire du premier arbre de transmission sensiblement vertical et en prise avec une roue d'addition cylindrique commune aux deux chaînes principales et reliée à l'arbre d'entraînement du rotor de sustentation,

- une chaîne cinématique auxiliaire, comportant au moins un pignon cylindrique et un arbre de tranamission relié au rotor anti-couple de l'hélicoptère, et destinée à dériver une fraction du couple délivré par l'un et/ou l'autre des deux moteurs vers le rotor anti-couple, et

- une chaîne cinématique de bouclage comprenant un train d'engrenages cylindriques, et reliant l'une à l'autre les deux chaînes principales, de manière à assurer, en cas d'arrêt et/ou de défaillance d'un premier moteur, la répartition du couple délivré par le second moteur, en fonctionnement, entre la chaîne principale accouplée à ce dernier et au moins le second étage réducteur de la chaîne principale accouplée au premier moteur, afin que la roue d'addition commune soit toujours entraînée par les deux pignons terminaux avec lesquels elle est en prise.

Selon le brevet français précité, le train d'engrenages cylindriques de la chaîne de bouclage comprend un pignon fou commun, monté de manière à tourner autour de l'extrémité inférieure de l'arbre d'entraînement du rotor de sustentation, et deux pignons droits qui engrènent avec le pignon fou et sont chacun solidaires en rotation de l'extrémité supérieure d'un tronçon inférieur rigide de l'arbre de transmission sensiblement vertical de l'une des deux chaînes cinématiques principales de transmission. Chacun des pignons droits est relié au pignon terminal de la chaîne principale correspondante, en prise avec la roue d'addition commune qui est un pignon commun de sortie solidaire en rotation de l'arbre d'entraînement du rotor principal, entre les extrémités de cet arbre, par un tronçon supérieur de l'arbre de transmission sensiblement vertical correspondant, et ce tronçon supérieur d'arbre est l'arbre présentant une certaine souplesse en torsion que comprend la chaîne cinématique principale correspondante.

Dans une telle réalisation, il est clair que la répartition du couple moteur disponible est assurée par le pignon fou et les pignons droits, entre les deux pignons terminaux en prise avec la roue d'addition commune, de sorte qu'en cas de panne d'un moteur, la puissance maximale d'urgence délivrée par l'autre moteur est transmise par la chaîne cinématique principale correspondante jusqu'à l'entrée du second étage réducteur de cette chaîne, où s'effectue la répartition. Pour cette raison, chacune des deux chaînes cinématiques principales doit être surdimensionnée jusqu'à l'entrée de son second étage réducteur, ce oui limite les possibilités d'allégement de la masse de la boîte de transmission principale.

De plus, un pignon droit supplémentaire engrène avec le pignon fou et est relié par un arbre souple en torsion et s'étendant verticalement vers le haut à un pignon associé qui engrène avec la roue d'addition commune. Simultanément, le pignon droit supplémentaire est relié par un arbre s'étendant verticalement vers le bas à un premier pignon d'un second train d'engrenages côniques, dont le second pignon entraîne un arbre de sortie sensiblement horizontal, qui constitue l'arbre de transmission d'une fraction du couple moteur vers le rotor anti-couple. De ce fait, la chaîne cinématique auxilieire, qui comprend trois arbres de transmission, deux pignons cylindriques et un train de deux pignons côniques, est lourde et complexe.

La présente invention a pour objet des perfectionnements apportés aux boîtes de transmission principale pour hélicoptères bimoteurs du type décrit dans le brevet français précité, et permettant de remédier aux inconvénients présentés par celles-ci.

A cet effet, la boîte de transmission principale conforme à l'invention du type présenté ci-dessus, se caractérise en ce que:

- le train d'engrenages cylindriques de la chaîne de bouclage comprend:

- deux pignons d'entrée de cette chaîne, qui sont chacun solidaire en rotation de l'arbre d'entrée d'une chaîne principale, et

- au moins un pignon intermédiaire, transmettant la rotation entre les deux pignons d'entrée, et constituant le pignon cylindrique de la chaîne auxiliaire qui entraîne directement l'arbre de transmission vers le rotor anti-couple, et

- l'arbre de transmission souple en torsion de chaque chaîne principale est monté entre le pignon d'entrée correspondant de la chaîne de bouclage et le premier pignon cônique correspondant qu'il entraîne en rotation. Dans une telle réalisation, l'addition des puissances des deux moteurs, qui s'effectue, comme dans le brevet français précité, au niveau du second étage réducteur, est obtenue grâce à l'interconnection des deux chaînes cinématiques principales qui est assurée au niveau de leur étage d'entrée par la chaîne de bouclage, de sorte qu'en cas de fonctionnement sur un moteur, la puissance maximale d'urgence de ce moteur soit distribuée sur les deux chaînes principales à partir de leur étage d'entrée. De ce fait, le dimensionnement de l'ensemble de chacune des deux chaînes cinématiques principales peut être juste suffisant pour la transmission de la puissance maximale continue ou de la fraction correspondante de la puissance maximale d'urgence, ce qui permet de réaliser une importante économie de masse sur les arbres, les pignons et les roulements utilisés sur ces chaînes cinématiques, ainsi que sur le carter qui les loge.

Cet avantage est d'autant plus marqué que les arbres présentant une certaine souplesse en torsion, appelés encore arbres torsibles, sont placés, conformément à l'invention, avant le premier étage réducteur des chaînes cinématiques principales, et peuvent donc être dimensionnés pour un couple plus faible que celui qui sollicite les arbres torsibles de la réalisation décrite dans le brevet français précité, puisque ce couple s'applique à des arbres entraînés avec une vitesse de rotation plus élevée, pour une même vitesse de rotation des arbres de sortie des moteurs auxquels les deux chaînes cinématiques principales sont accouplées.

De plus, l'absence de pignon fou disposé sous la roue d'addition commune et monté en rotation autour de l'extrémité inférieure de l'arbre d'entraînement du rotor de sustentation permet de réaliser une boîte de transmission principale selon l'invention qui présente un encombrement vertical notablement inférieur à celui du dispositif faisant l'objet du brevet français précité.

Il faut noter également que la chaîne cinématique auxiliaire de la boîte de transmission principale selon l'invention est de structure très simple, puisqu'elle est constituée uniquement de l'un des pignons intermédiaires du train d'engrenages de la chaîne de bouclage qui relie les arbres d'entrée des chaînes cinématiques principales, et d'un arbre de transmission vers le rotor anti-couple, cet arbre étant parallèle aux arbres d'entrée des chaînes principales ainsi qu'aux arbres de sortie des moteurs du fait de la nature cylindrique des pignons de la chaîne de bouclage, de sorte que cet arbre s'étend dans le plan sensiblement horizontal défini par les axes des arbres de sortie des deux moteurs, ce qui est une disposition très favorable à l'extension de cet arbre jusqu'à la boîte de transmission auxiliaire au voisinage du rotor anti-couple à l'arrière de l'hélicoptère. De ce fait, il est inutile de prévoir dans la chaîne auxiliaire de la boîte de transmission principale, des arbres verticaux, un pignon cylindrique engrènant avec la roue d'addition commune et un train d'engrenages côniques, comme cela est le cas dans le brevet français précité.

Avantageusement, les deux pignons d'entrée et le ou les pignons intermédiaires de la chaîne de bouclage sont des pignons cylindriques à denture hélicoïdale. La chaîne de bouclage peut comprendre soit un unique pignon intermédiaire engrènant avec chacun des deux pignons d'entrée de cette chaîne et disposé sensiblement entre-eux, soit plusieurs pignons intermédiaires, dont celui qui constitue le pignon d'entraînement de l'arbre de transmission au rotor anticouple est relié à l'un au moins des pignons d'entrée de la chaîne de bouclage par au moins un autre pignon intermédiaire assurant l'entraînement d'au moins un accessoire tel qu'un alternateur, une pompe hydraulique ou un frein-rotor. Dans ce dernier cas, qui permet de s'adapter à un écartement relativement important des deux arbres d'entrée, imposé par exemple par le diamètre hors tout des moteurs, il est avantageux que la chaîne de bouclage comprenne un nombre impair de pignons intermédiaires dont celui qui constitue le pignon d'entraînement de l'arbre de transmission au rotor anticouple est relié à chacun des deux pignons d'entrée de la chaîne de bouclage par un nombre égal de pignons intermédiaires qui sont en prise les une avec les autres, afin d'obtenir une réalisation équilibrée sur le plan de la répartition des masses et des charges.

De plus, dans le cas où les moteurs ne sont pas du type comportant une roue libre intégrée sur leur étage de sortie, chacun des arbres d'entrée de la boîte de transmission principale selon l'invention est avantageusement accouplé à l'arbre de sortie du moteur correspondant par une roue libre.

Dans une boîte de transmission principale selon l'invention, du fait de l'interconnexion des étages d'entrée des deux chaînes cinématiques principales, qui est assurée par les pignons de la chaîne de bouclage, l'ensemble des chaînes cinématiques devient hyperstatique. La souplesse qui est, d'une part, requise par cet ensemble hyperstatique, afin de réaliser dans de bonnes conditions le partage de puissance entre les deux chaînes principales en cas de fonctionnement sur un seul moteur, est procurée par les arbres torsibles reliant chacun un pignon d'entrée de la chaîne de bouclage au pignon cônique du premier étage réducteur correspondant. Mais il est, d'autre part, nécessaire d'assurer un règlage des pignons afin d'obtenir un contact d'engrènement simultané des dentures des différentes chaînes cinématiques de l'ensemble, en compensant les jeux d'engrènement et les tolérances de fabrication. Ceci est pour partie obtenu par le fait que l'un au moins mais de préférence chacun des deux arbres de transmission souple en torsion est muni de cannelures à chacune de ses extrémités, les cannelures d'une extrémité présentant un décalage angulaire par rapport à celles de l'autre extrémité. Dans une forme simple de réalisation, les arbres de transmission souple en torsion comportent un nombre de cannelures différent à chaque extrémité.

Dans le même but, l'un au moins des deux pignons d'entrée à denture hélicoïdale de la chaîne de bouclage, est réglable par translation sur son axe, afin d'assurer la simultanéité d'engrènement des dentures sur tous les pignons de la chaîne de bouclage.

Selon un premier exemple de réalisation, et comme dans le brevet français précité, la roue d'addition commune est solidaire en rotation de l'arbre d'entraînement du rotor de sustentation, et présente une denture hélicoïdale coopérant avec une denture de même nature des pignons terminaux.

Cependant, dans le cas d'hélicoptères de tonnage plus élevé, il peut être intéressant d'intercaler, entre la roue d'addition commune et l'arbre rotor, un ou plusieurs étages de réduction, réalisés sous forme de réducteurs épicycloïdaux.

D'autres avantages et caractéristiques de l'invention ressortiront de la description qui suit d'exemples de réalisation décrits à titre non limitatif en référence aux dessins annexés dans lesquels:

- la figure 1 est une représentation schématique en perspective d'un exemple de boîte de transmission principale à trois étages de réduction pour un hélicoptère bimoteur,

- la figure 2 est une représentation analogue d'un exemple de boîte de transmission principale à deux étages de réduction seulement, pour un hélicoptère bimoteur.

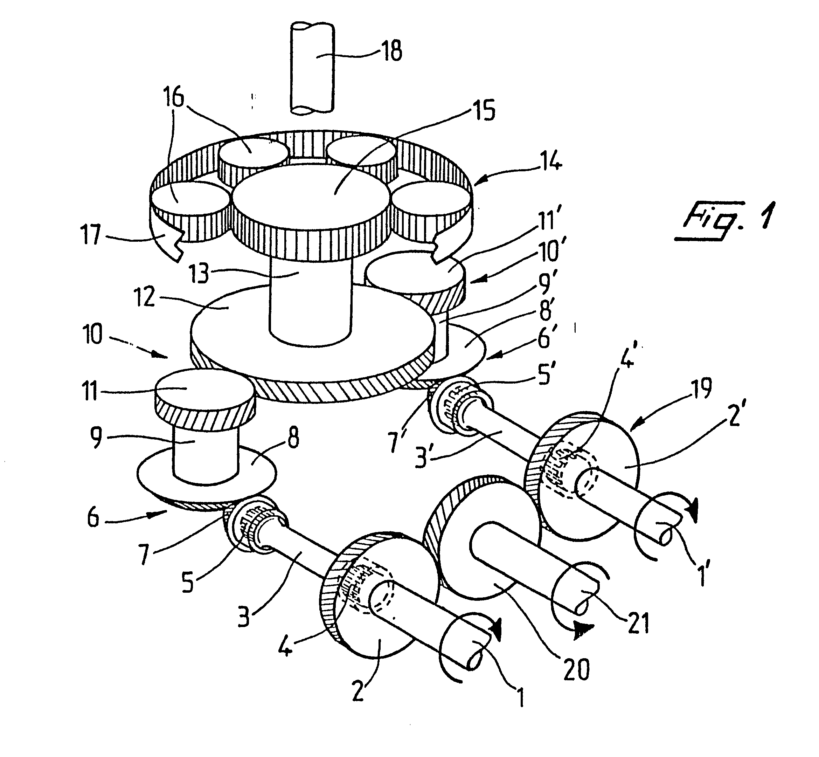

Sur la figure 1, on a représenté une boîte de transmission principale pour un hélicoptère bimoteur équipé de deux groupes turbo-moteurs (non représentés) disposés sensiblement côte à côte et munis chacun d'une roue libre sur leur arbre de sortie qui sont parallèles l'un à l'autre dans un même plan horizontal et parallèles à l'axe longitudinal de l'hélicoptère.

Chaque moteur entraîne une chaîne cinématique principale, dont l'étage d'entrée comprend un arbre d'entrée 1 ou 1' horizontal, d'axe confondu avec celui de l'arbre de sortie du moteur auquel l'arbre d'entrée 1 ou 1 est directement accouplé. A son extrémité aval, dans le sens de la transmission de la puissance, c'est-à-dire à son extrémité opposée au moteur, chaque arbre d'entrée 1 ou 1' est solidaire en rotation d'un pignon cylindrique 2 ou 2' à denture hélicoïdale. L'étage d'entrée de chaque chaîne cinématique principale comprend également un second arbre 3 ou 3', qui est un arbre présentant une certaine souplesse en torsion, appelé arbre torsible dans la suite du présent mémoire, et qui est coaxial au pignon 2 ou 2' et à l'arbre d'entrée 1 ou 1' correspondant, sensiblement dans le prolongement de ce dernier. A son extrémité amont, chacun des arbres torsibles 3 et 3' présente un certain nombre de cannelures externes 4 ou 4' par lesquelles il est lié en rotation à des cannelures internes de forme complémentaire d'un manchon court présenté par le pignon 2 ou 2' correspondant sur sa face opposée à l'arbre d'entrée 1 ou 1' correspondant, tandis qu'à son extrémité aval, chaque arbre torsible 3 ou 3' présente un nombre différent de cannelures externes 5 ou 5' par lesquelles il est lié en rotation à des cannelures internes de forme complémentaire d'un manchon court présenté par la grande base d'un premier pignon cônique 7 ou 7' d'un train d'engrenages côniques à denture hélicoïdale constituant un premier étage réducteur 6 ou 6'. Le premier pignon cônique 7 ou 7' engrène avec un second pignon cônique 8 ou 8' de cet étage réducteur, le second pignon cônique 8 ou 8' étant en fait une roue cônique d'axe vertical, solidaire en rotation de l'extrémité inférieure d'un arbre de transmission vertical 9 ou 9'. A son extrémité supérieure, cet arbre vertical 9 ou 9' est également solidaire en rotation d'un pignon cylindrique 11 ou 11' à denture hélicoïdale, qui est le pignon d'entrée d'un train d'engrenages cylindriques constituant un second étage réducteur 10 ou 10', et comprenant également une roue cylindrique 12 à denture hélicoïdale avec laquelle chacun des deux pignons 11 et 11' est en prise. La roue 12 est ainsi une roue commune aux deux chaînes cinématiques principales et à laquelle la somme des puissances délivrées par les deux moteurs est transmise. La roue commune d'addition 12 est solidaire en rotation de l'extrémité inférieure d'un arbre de transmission 13 central et vertical, dont l'extrémité supérieure entraîne en rotation un pignon planétaire 15 cylindrique et a denture droite d'un train d'engrenages épicycloïdal 14 qui constitue un étage réducteur de sortie de la boîte de transmission principale. Cet étage de sortie épicycloïdal 14 comprend également des pignons satellites 16, cylindriques et à denture droite, qui sont régulièrement répartis autour du pignon planétaire 15 et sont chacun en prise avec ce dernier et avec une couronne externe 17 cylindrique à denture interne droite. De manière bien connue en soi, les satellites 16 sont montés en rotation chacun autour de son axe sur un porte-satellite commun (non représenté) solidaire en rotation de l'extrémité inférieure d'un arbre vertical 18 qui est l'arbre d'entraînement du rotor de sustentation de l'hélicoptère, coaxial au pignon planétaire 15, à l'arbre de transmission vertical 13 et à la roue commune d'addition 12, et auquel un couple important peut être transmis grâce à la présence de l'étage de réduction épicycloïdal 14. Les deux chaînes cinématiques principales sont couplées l'une à l'autre, au niveau de leur étage d'entrée, par une chaîne de bouclage constituée d'un train d'engrenages cylindriques 19 à denture hélicoïdale. Cette chaîne de bouclage 19 comprend les deux pignons 2 et 2' et un pignon intermédiaire 20, disposé entre les pignons 2 et 2' et en prise avec chacun d'eux. De plus, le pignon intermédiaire 20 est solidaire en rotation de l'extrémité avant d'un arbre horizontal 21 qui constitue l'arbre de transmission du couple vers le rotor anti-couple monté à l'arrière de l'hélicoptère. De ce fait, le pignon auxiliaire 20 constitue le pignon de sortie d'une chaîne cinématique auxiliaire transmettant au rotor anti-couple une fraction du couple disponible sur les arbres d'entrée 1 et 1' des deux chaînes cinématiques principales, et chacun des deux pignons 2 et 2' constitue un pignon de la chaîne de bouclage 19 qui assure la répartition, sur les deux chaînes cinématiques principales et sur la chaîne cinématique auxiliaire, de la puissance délivrée par un seul moteur, lorsque l'autre moteur est en panne. Comme l'ensemble des deux chaînes cinématiques principales est fermé par la chaîne de bouclage 19, qui constitue, avec les deux arbres d'entrée 1 et 1', l'étage d'entrée de la boîte de transmission principale, le dispositif devient hyperstatique. Il est donc nécessaire d'introduire une certaine souplesse en torsion dans les liaisons, afin d'assurer une bonne répartition des charges, et simultanément d'effectuer un réglage assurant la simultanéité d'engrènement aux niveaux des différents pignons en prise les une avec les autres.

La souplesse en torsion nécessaire à une bonne répartition des charges est obtenue grâce à la présence des arbres torsibles 3 et 3', dont chacun est monté entre le pignon d'entrée 2 ou 2' correspondant de la chaîne de bouclage 19, en amont, et le pignon cônique 7 ou 7' correspondant du premier étage réducteur 6 ou 6', en aval.

Le réglage de la simultanéité d'engrènement est assuré par la superposition d'un réglage grossier et d'un règlage fin. Le réglage grossier est obtenu grâce au décalage angulaire qui existe entre les cannelures 4 ou 4' de l'extrémité amont des arbres torsibles 3 et 3' et les cannelures 5 ou 5' de l'extrémité aval de ces derniers, ce décalage angulaire résultant des nombres différents des cannelures 4 ou 4' et 5 ou 5'. Ensuite, le règlage fin est assuré par un calage de l'un des pignons 2 et 2' d'entrée de la chaîne de bouclage 19 après un déplacement de ce pignon 2 ou 2' sur son axe. En effet, comme la denture de ce pignon 2 ou 2' est hélicoïdale, un déplacement axial de ce pignon conduit à une avance ou à retard de phase pour le contact des dentures, selon le sens du déplacement axial, et par ce réglage précis, les dentures peuvent être amenées simultanément en contact les unes avec les autres. Le positionnement axial précis du pignon 2 ou 2' est par exemple obtenu d'une manière simple en mettant en place au moins une cale entre d'une part une bride supportant le boitier des roulements sur lesquels s'appuie l'arbre d'entrée 1 ou 1' correspondant et d'autre part le carter dans lequel sont logés l'arbre d'entrée et les roulements.

Ainsi, dans une boîte de transmission principale ayant cette configuration et équipant un hélicoptère bimoteur dont la masse totale est d'environ 4 000 kg, sur lequel chaque moteur délivre une puissance maximale continue de 500 kW, on obtient:

- en fonctionnement bimoteur, une distribution d'un peu moins de 500 kW dans chacune des chaînes cinématiques principales, et donc une puissance légèrement inférieure à 1 000 kW sur l'arbre 18 du rotor principal, le reste de la puissance délivrée par les moteurs servant à entraîner le rotor anti-couple et des accessoires (non représentés) tels que des alternateurs, des pompes hydrauliques, un frein rotor, etc...

-en fonctionnement monomoteur, et en tenant compte de ce que la répartition de puissance assurée par la chaîne de bouclage 19 s'effectue aux deux tiers dans la chaîne cinématique principale accouplée au moteur en fonctionnement et au tiers restant dans la chaîne cinématique principale associée au moteur en panne, avec une puissance maximale d'urgence du moteur en fonctionnement qui est de 750 kW, la chaîne cinématique principale accouplée au moteur en fonctionnement reçoit une puissance d'environ 500 kW, tandis que l'autre chaîne principale ne reçoit qu'environ 250 kW, de sorte qu'une puissance légèrement inférieure à 750 kW est transmise au rotor principal, le reste de la puissance délivrée étant transmis, comme précédemment, au rotor anticouple et aux accessoires.

Il est clair qu'en l'absence de chaîne de bouclage 19, le dimensionnement de chaque chaîne cinématique principale devrait être assuré pour qu'elle puisse transmettre une puissance maximale de 750 kW et non de 500 kW, ce qui serait très pénalisant sur le plan de la masse, surtout au niveau du second étage de réduction 10 ou 10'.

Pour un régime de rotation des arbres de sortie des moteurs, et donc des arbres d'entrée 1 et 1 d'environ 8 000 tr/mn, les rapports de réduction aux niveaux des différents étages de réduction sont tels que les arbres 9 et 9' ont un régime de rotation d'environ 4 700 tr/mn et que l'arbre 18 du rotor principal tourne à environ 320 tr/mn, l'arbre 21 de transmission au rotor anti-couple tournant à environ 4 000 tr/mn.

Dans cet exemple, il est également à noter que les pignons 11 et 11' et la roue cylindrique 12 peuvent éventuellement avoir une denture droite et non hélicoïdale.

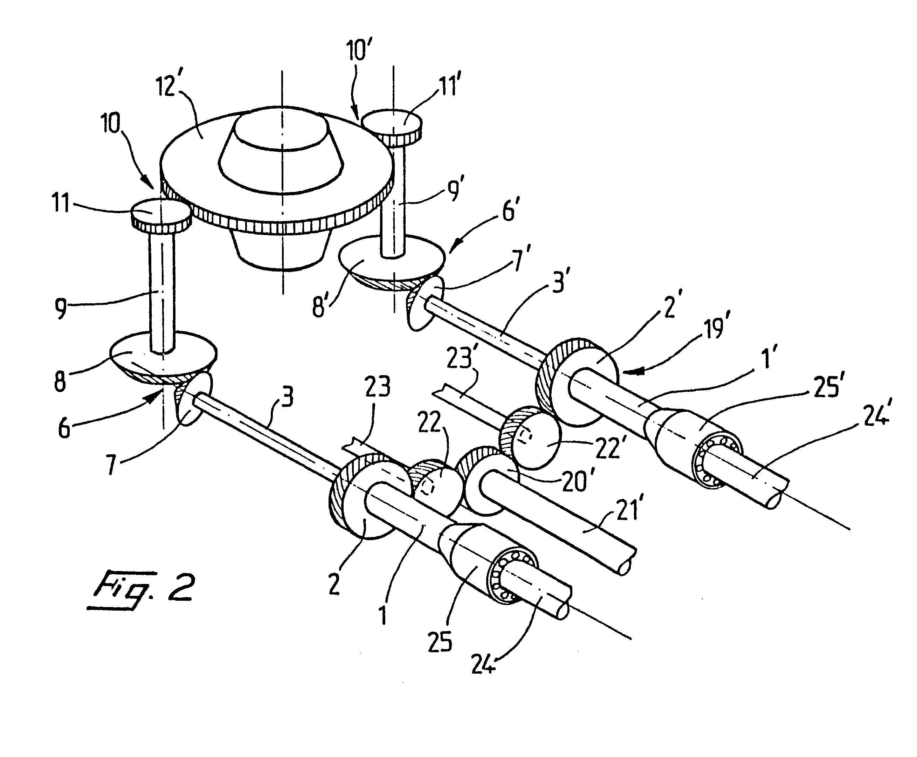

La boîte de transmission principale schématiquement représentée sur la figure 2 présente de nombreuses caractéristiques communes avec la boîte de transmission qui est décrite ci-dessus en référence à la figure 1, de sorte que les mêmes références numériques, éventuellement affectées d'un symbole ' sont utilisées pour désigner les composants identiques ou analogues, qui ne sont pas à nouveau décrits de manière détaillée, la suite de la description se rapportant essentiellement aux deux différences principales présentées par la réalisation de la figure 2 par rapport à celle de la figure 1.

Une première différence importante est que la boîte de transmission principale de la figure 2 ne comporte pas d'étage réducteur épicycloïdal. L'arbre (non représenté) d'entraînement du rotor est directement solidaire en rotation, par son extrémité inférieure, de la roue centrale d'addition 12', cylindrique et à denture hélicoïdale, qui est commune aux deux chaînes cinématiques principales et en prise avec les pignons cylindriques à denture hélicoïdale 11 et 11' du second étage de réduction, constituant l'étage de sortie de la boîte.

L'autre différence importante est que la chaîne de bouclage 19' comprend, en plus des deux pignons d'entrée cylindriques à denture hélicoïdale 2 et 2', trois pignons intermédiaires de même nature, dont le pignon intermédiaire central est le pignon 20' solidaire en rotation de l'arbre de transmission 21' au rotor anti-couple. Ce pignon 20' est relié à chacun des pignons d'entrée 2 et 2' par un pignon intermédiaire latéral 22 ou 22', avec lequel il est en prise et qui est lui-même en prise avec le pignon d'entrée 2 ou 2' correspondant. Chacun des deux pignons 22 et 22' est solidaire en rotation de l'extrémité arrière d'un arbre 23 ou 23' d'entraînement d'un accessoire (non représenté) tel qu'un alternateur, une pompe hydraulique ou un frein rotor.

Ces arbres 23 et 23' s'étendent parallèlement aux arbres rigides 1, 1' et 21' et aux arbres torsibles 3 et 3', et peuvent être dirigés vers les moteurs ou, comme représenté sur la figure 2, de l'autre côté.

Les pignons intermédiaires supplémentaires 22 et 22', utilisés pour entraîner directement, d'un côté ou de l'autre de la boîte de transmission principale, des boîtiers d'accessoires et d'équipements, qui continueront tous à fonctionner même en cas de panne d'un moteur, sont également utiles pour adapter la chaîne de bouclage à un écartement relativement important entre les deux arbres d'entrée 1 et 1', cet écartement pouvant être imposé par le diamètre externe des moteurs.

Enfin, dans le cas où les moteurs ne sont pas pourvus d'une roue libre intégrée à leur étage de sortie, chacun des deux arbres d'entrée 1 et 1' est accouplé à l'arbre de sortie 24 ou 24' du moteur correspondant par l'intermédiaire d'une roue libre 25 ou 25' comme représenté sur la figure 2.

Pour un régime de rotation des arbres moteurs 24 et 24', des arbres d'entrée 1 et 1' et des arbres torsibles 3 et 3' de 6 000 tr/mn, les rapports de réduction des premiers étages 6 et 6' et des seconds étages 10 et 10' réducteurs des deux chaînes cinématiques principales ainsi que du train d'engrenages de la chaîne de bouclage 19' sont tels que les arbres verticaux 9 et 9' sont entraînés avec une vitesse de rotation de 1 500 tr/mn environ, l'arbre d'entraînement du rotor principal tournant à environ 350 tr/mn tandis que l'arbre 21' de transmission au rotor anti-couple tourne à environ 4 000 tr/mn.

Dans cet exemple comme dans le précédent, la souplesse en torsion est introduite par les arbres torsibles 3 et 3', ayant des nombres différents de cannelures aux deux extrémités, afin de permettre le réglage grossier de la simultanéité d'engrènement, le réglage fin étant également assuré par calage de l'un des pignons 2 et 2' à denture hélicoïdale après un déplacement axial approprié de ce pignon.

## Revendications

1. Boîte de transmission principale pour hélicoptère bimoteur, comprenant:
- deux chaînes cinématiques principales, comportant chacune des trains d'engrenages et des arbres de transmission, dont l'un (3, 3') présente une certaine souplesse en torsion, et destinées chacune à transmettre le couple disponible sur l'arbre de sortie (24, 24') de l'un des deux moteurs à un arbre d'entraînement (18) sensiblement vertical d'un rotor de sustentation de l'hélicoptère, chaque chaîne principale comprenant:
- un étage d'entrée, comportant un arbre d'entrée (1, 1') accouplé au moteur correspondant, et entraîné à partir de ce dernier par l'intermédiaire d'une roue libre (25, 25') et de l'arbre de sortie (24, 24') du moteur, et sensiblement aligné avec ledit arbre de sortie (24, 24') du moteur,
- un premier étage réducteur (6, 6'), constitué par un train d'engrenages côniques comprenant un premier pignon cônique (7, 7') entraîné à partir de l'arbre d'entrée (1, 1') et en prise avec un second pignon cônique (8, 8') solidaire d'un premier arbre de transmission (9, 9') sensiblement vertical, et
- un second étage réducteur (10, 10'), constitué par un train d'engrenages cylindriques comprenant un pignon terminal (11, 11') solidaire du premier arbre de transmission (9, 9') sensiblement vertical et en prise avec une roue d'addition cylindrique (12, 12') commune aux deux chaînes principales et reliée à l'arbre d'entraînement (18) du rotor de sustentation,
- une chaîne cinématique auxiliaire, comportant au moins un pignon cylindrique (20, 20') et un arbre de transmission (21, 21') relié au rotor anti-couple de l'hélicoptère, et destinée à dériver une fraction du couple délivré par l'un et/ou l'autre des deux moteurs vers le rotor anticouple, et
- une chaîne cinématique de bouclage (19, 19') comprenant un train d'engrenages cylindriques et reliant l'une à l'autre les deux chaînes principales de manière à assurer, en cas d'arrêt et/ou de défaillance d'un premier moteur, la répartition du couple délivré par le second moteur, en fonctionnement, entre la chaîne principale accouplée à ce dernier et au moins le second étage réducteur (10, 10') de la chaîne principale accouplée au premier moteur, afin que la roue d'addition commune (12, 12') soit toujours entraînée par les deux pignons terminaux (11, 11') avec lesquels elle est en prise, caractérisée en ce que:
- le train d'engrenages cylindriques de la chaîne de bouclage (19, 19') comprend:
- deux pignons d'entrée (2, 2') de cette chaîne (19, 19'), qui sont chacun solidaire en rotation de l'arbre d'entrée (1, 1') d'une chaîne principale,
- au moins un pignon intermédiaire (20, 20'), transmettant la rotation entre les deux pignons d'entrée (2, 2') et constituant le pignon cylindrique de la chaîne auxiliaire qui entraîne directement l'arbre de transmission (21, 21') au rotor anti-couple, et
- l'arbre de transmission (3, 3') souple en torsion de chaque chaîne principale est monté entre le pignon d'entrée (2, 2') correspondant de la chaîne de bouclage (19, 19') et le premier pignon cônique (7, 7') correspondant qu'il entraîne en rotation.

2. Boîte de transmission principale selon la revendication 1, caractérisée en ce que les deux pignons d'entrée (2, 2') et le ou les pignons intermédiaires (20, 20', 22, 22') de la chaîne de bouclage (19, 19') sont des pignons cylindriques à denture hélicoïdale.

3. Boîte de transmission principale selon l'une des revendications 1 et 2, caractérisée en ce que la chaîne de bouclage (19) comprend un unique pignon intermédiaire (20) engrènant avec chacun des deux pignons d'entrée (2, 2') de cette chaîne et disposé sensiblement entre eux.

4. Boîte de transmission principale selon l'une des revendications 1 et 2, caractérisée en ce que la chaîne de bouclage (19') comprend plusieurs pignons intermédiaires (20', 22, 22') dont celui (20') qui constitue le pignon d'entraînement de l'arbre de transmission (21') au rotor anti-couple est relié à l'un au moins des pignons d'entrée (2, 2') de la chaîne de bouclage (19') par au moins un autre pignon intermédiaire (22, 22') assurant l'entraînement (23, 23') d'au moins un accessoire tel qu'un alternateur, une pompe hydraulique ou un frein rotor.

5. Boîte de transmission principale selon la revendication 4, caractérisée en ce que la chaîne de bouclage (19') comprend un nombre impair de pignons intermédiaires (20', 22, 22') dont celui (20') qui constitue le pignon d'entraînement de l'arbre de transmission (21') au rotor anti-couple est relié à chacun des deux pignons d'entrée (2, 2') de la chaîne de bouclage (19') par un nombre égal de pignons intermédiaires (22, 22') qui sont éventuellement en prise les une avec les autres.

6. Boîte de transmission principale selon l'une des revendications 1 à 5, caractérisée en ce que l'un au moins des deux arbres de transmission souple en torsion (3, 3') est muni de cannelures (4, 4', 5, 5') à chacune de ses extrémités, les cannelures (4, 4') d'une extrémité présentant un décalage angulaire par rapport à celles (5, 5') de l'autre extrémité.

7. Boîte de transmission principale selon l'une des revendications 1 à 6, caractérisée en ce que l'un au moins des deux arbres de transmission souples en torsion (3, 3') comporte un nombre de cannelures (4, 4', 5, 5') différents à chaque extrémité.

8. Boîte de transmission principale selon l'une des revendications 3 à 7, telle que rattachée à la revendication 2, caractérisée en ce que l'un au moins des deux pignons d'entrée à denture hélicoïdale (2, 2') de la chaîne de bouclage (19, 19') est réglable par translation sur son axe, afin d'assurer la simultanéité d'engrènement des dentures sur tous les pignons de la chaîne de bouclage (19, 19').

9. Boîte de transmission principale selon l'une des revendication 1 à 8, caractérisée en ce que la roue d'addition commune (12') est solidaire en rotation de l'arbre d'entraînement du rotor de sustentation et présente une denture droite hélicoïdale coopérant avec une denture de même nature des pignons terminaux (11, 11').

10. Boîte de transmission principale selon l'une des revendications 1 à 8, caractérisée en ce que la roue d'addition commune (12) est solidaire en rotation d'un second arbre de transmission vertical (13) qui est lui-même solidaire en rotation d'un pignon planétaire (15) d'un train d'engrenages épicycloïdal constituant un étage réducteur de sortie (14) qui transmet le couple de rotation à l'arbre d'entraînement (18) du rotor de sustentation.

11. Boîte de transmission principale selon l'une des revendications 1 à 10, caractérisée en ce que chaque arbre d'entrée (1, 1') est accouplé à l'arbre de sortie (24, 24') du moteur correspondant par une roue libre (25, 25').

**Patentansprüche**

1. Hauptgetriebe für einen zweimotorigen Hubschrauber mit:

zwei kinematischen Hauptketten, von denen jede Zahnradsätze und Transmissionswellen aufweist, wovon die eine (3, 3') eine gewisse Torsionselastizität aufweist, und die jeweils dazu dienen, ein an der Ausgangswelle (24, 24') des einen der beiden Motoren verfügbare Drehmoment an eine im wesentlichen senkrechte Antriebswelle (18) eines Stützkraftrotors des Hubschraubers zu übertragen, wobei jede Hauptkette umfasst:

- eine Eingangsstufe, die eine Eingangswelle (1, 1') aufweist, die an einen zugehörigen Motor gekoppelt ist, und ausgehend von diesem unter Zwischenschaltung einer Freilaufkupplung (25, 25') angetrieben wird, sowie die Ausgangswelle (24, 24') des Motors, mit welcher sie im wesentlichen fluchtend angeordnet ist,

- eine erste Untersetzungsstufe (6, 6'), die durch einen Kegelradsatz gebildet wird, der ein erstes Kegelritzel (7, 7') enthält, das, ausgehend von der Eingangswelle (1, 1'), angetrieben wird und in Eingriff mit einem zweiten Kegelritzel (8, 8') steht, das mit einer ersten, im wesentlichen vertikalen Transmissionswelle (9, 9') fest verbunden ist, und

- eine zweite Untersetzungsstufe (10, 10'), die durch einen Zylinderradsatz gebildet wird, der ein endseitiges Ritzel (11, 11') aufweist, das mit der ersten im wesentlichen vertikalen Transmissionswelle (9, 9') fest verbunden ist und in Eingriff mit einem zusätzlichen Zylinderrad (12, 12') steht, das den beiden Hauptketten gemeinsam ist und mit der Antriebswelle (18) des Stützkraftrotors verbunden ist,

- eine kinematische Hilfskette, die mindestens ein Zylinderritzel (20, 20') und eine Transmissionswelle (21, 21') enthält, die mit dem Ausgleichsrotor des Hubschraubers verbunden ist und die dazu dient, einen Bruchteil des von dem einen und/oder dem anderen der beiden Motore gelieferten Drehmomentes zum Ausgleichsrotor abzuzweigen, und

- eine eine Schleife bildende kinematische Kette (19, 19'), die einen Zylinderradsatz umfasst und die eine der beiden Hauptketten mit der anderen Hauptkette verbindet, um im Falle eines Stillstandes und/oder einer Störung eines ersten Motors die Verteilung des vom zweiten Motor gelieferten Drehmomentes zu gewährleisten, zwischengeschaltet zwischen der mit dem zweiten Motor gekoppelten Hauptkette und zumindest der zweiten Untersetzungsstufe (10, 10') der mit dem ersten Motor gekoppelten Hauptkette, damit das gemeinsame zusätzliche Zylinderrad (12, 12') immer von den beiden Endritzeln (11, 11') angetrieben wird, mit denen es in Eingriff steht,
dadurch gekennzeichnet, dass der Zylinderradsatz der eine Schleife bildenden kinematischen Kette (19, 19') umfasst:
- zwei Eingangsritzel (2, 2') dieser kinematischen Kette (19, 19'), wovon jedes mit der Eingangswelle (1, 1') einer jeden kinematischen Hauptkette zur Drehung fest verbunden ist,
- mindestens ein Zwischenritzel (20, 20'), das die Drehung zwischen den beiden Eingangsritzeln (2, 2') überträgt, und das das Zylinderritzel der Hilfskette bildet, die unmittelbar die Transmissionswelle (21, 21') für den Ausgleichsrotor antreibt, und dass die torsionselastische Transmissionswelle (3, 3') jeder kinematischen Hauptkette zwischen dem zugehörigen Eingangsritzel (2, 2') der die Schleife bildenden kinematischen Kette (19, 19') und dem ersten zugeordneten Kegelritzel (7, 7') angeordnet ist, das sie in Drehung versetzt.

2. Hauptgetriebe nach Anspruch 1, dadurch gekennzeichnet, dass die beiden Eingangsritzel (2, 2') und das Zwischenritzel oder die Zwischenritzel (20, 20', 22, 22') der die Schleife bildenden kinematischen Kette (19, 19') Zylinderritzel mit einer Schrägverzahnung sind.

3. Hauptgetriebe nach einem der Ansprüche 1 und 2, dadurch gekennzeichnet, dass die die Schleife bildende kinematische Kette (19) ein einzelnes Zwischenritzel (20) aufweist, das mit jedem der beiden Eingangsritzel (2, 2') dieser kinematischen Kette in Eingriff steht und im wesentlichen zwischen diesen liegt.

4. Hauptgetriebe nach einem der Ansprüche 1 und 2, dadurch gekennzeichnet, dass die die Schleife bildende kinematische Kette (19') mehrere Zwischenritzel (20', 22, 22') aufweist, wovon jenes (20'), das das Antriebsritzel der Transmissionswelle (21') des Ausgleichsrotors bildet, mit zumindest einem der Eingangsritzel (2, 2') der die Schleife bildenden kinematischen Kette (19') über mindestens ein anderes Zwischenritzel (22, 22') verbunden ist, das den Antrieb mindestens eines Zusatzgerätes, wie beispielsweise eines Wechselstromgenerators, einer Hydraulikpumpe oder eines Bremsrotors ermöglicht.

5. Hauptgetriebe nach Anspruch 4, dadurch gekennzeichnet, dass die die Schleife bildende kinematische Kette (19') eine ungerade Anzahl von Zwischenritzeln (20', 22, 22') aufweist, wovon jenes (20'), das das Antriebsritzel der Transmissionswelle (21') zum Ausgleichsrotor bildet, mit jedem der beiden Eingangsritzel (2, 2') der die Schleife bildenden kinematischen Kette (19') über eine gleiche Anzahl von Zwischenritzeln (22, 22') verbunden ist, die möglichenfalls in Eingriff miteinander stehen.

6. Hauptgetriebe nach einem der Ansprüche 1 bis 5, dadurch gekennzeichnet, dass mindestens eine der beiden torsionselastischen Transmissionswellen (3, 3') mit Nuten (4, 4', 5, 5') an beiden Enden ausgestattet ist, und dass die Nuten (4, 4') des einen Endes eine Winkelversetzung gegenüber jenen (5, 5') des anderen Endes aufweisen.

7. Hauptgetriebe nach einem der Ansprüche 1 bis 6, dadurch gekennzeichnet, dass mindestens eine der beiden torsionselastischen Transmissionswellen (3, 3') eine Anzahl von Nuten (4, 4', 5, 5') aufweist, die an jedem Ende verschieden ist.

8. Hauptgetriebe nach einem der Ansprüche 3 bis 7, und rückbezogen auf Anspruch 2, dadurch gekennzeichnet, dass mindestens eines der beiden eine Schrägverzahnung aufweisenden Eingangsritzel (2, 2') der die Schleife bildenden kinematischen Kette (19, 19') mittels Translation auf seiner Achse einstellbar ist, um die Gleichzeitigkeit des Zahnradeingriffes bei allen Ritzeln der die Schleife bildenden kinematischen Kette (19, 19') zu gewährleisten.

9. Hauptgetriebe nach einem der Ansprüche 1 bis 8, dadurch gekennzeichnet, dass das zusätzliche gemeinsame Zylinderrad (12') zusammen mit der Antriebswelle des Abstützrotors umläuft und eine geradlinige Schrägverzahnung aufweist, die mit einer Verzahnung gleicher Art an den Endritzeln (11, 11') zusammenwirkt.

10. Hauptgetriebe nach einem der Ansprüche 1 bis 8, dadurch gekennzeichnet, dass das zusätzliche Zylinderrad (12) zusammen mit einer zweiten vertikalen Transmissionswelle (13) umläuft, die ihrerseits zusammen mit einem Planetenritzel (15) eines Epicycloid-Radsatzes verbunden ist, der eine Ausgangs-Untersetzungsstufe (14) bildet, die das Drehmoment zur Antriebswelle (18) des Abstützrotors überträgt.

11. Hauptgetriebe nach einem der Ansprüche 1 bis 10, dadurch gekennzeichnet, dass jede Eingangswelle (1, 1') mit der Ausgangswelle (24, 24') des zugeordneten Motors durch eine Freilaufkupplung (25, 25') verbunden ist.

**Claims**

1. A main transmission gearbox for a twin engined helicopter, comprising:
- two main kinematic chains each including gear trains and transmission shafts, one of which (3, 3') exhibits a certain flexibility in torsion, and each intended to transmit the available torque through the output shaft (24, 24') of one of the two engines to a substantially vertical drive shaft (18) of a lift rotor of the helicopter, each main chain including:
- an input stage having an input shaft (1, 1') coupled to the corresponding engine and driven from this latter through a free wheel (25, 25') and the output shaft, (24, 24') of the engine, and substantially aligned with said output shaft (24, 24') of the engine,

- a first reduction stage (6, 6') formed by a train of bevel gear including a first bevel pinion (7, 7') driven from the input shaft (1, 1') and in mesh with a second bevel pinion (8, 8') integral with a first substantially vertical transmission shaft (9, 9'), and

- a second reduction stage (10, 10'), formed by a train of cylindrical gears including a terminal pinion (11, 11') integral with the first substantially vertical transmission shaft (9, 9') and in mesh with a cylindrical adding gearwheel (12 12') common to the main chains and connected to the drive shaft (18) of the lift rotor,

- an auxiliary kinematic chain, including at least one cylindrical pinion (20, 20') and a transmission shaft (21, 21') connected to the antitorque rotor of the helicopter, and intended to divert a fraction of the torque delivered by one and/or other of the two engines to the anti-torque rotor, and

- a coupling kinematic chain (19, 19') including a cylindrical gear train and connecting the two main chains together so as to ensure, in case of stoppage and/or failure of the first engine, sharing of the torque delivered by the second engine still in operation between the main chain coupled to this latter and at least the second reduction stage (10, 10') of the main chain coupled to the first engine, so that the common adding gearwheel (12, 12') is always driven by the two terminal pinions (11, 11') with which it is in mesh, characterized in that:

- the cylindrical gear train of the coupling chain (19, 19') includes:

- two input pinions (2, 2') of this chain (19, 19'), which are each integral in rotation with the input shaft (1, 1') of the main chain,

- at least one intermediate pinion (20, 20') transmitting the rotation between the two input pinions (2, 2') and forming the cylindrical pinion of the auxiliary chain which drives directly the transmission (21, 21') to the antitorque rotor, and

- the transmission shaft (3, 3'), flexible in torsion, of each main chain is mounted between the corresponding input pinion (2, 2') of the coupling chain (19, 19') and the first corresponding bevel pinion (7, 7') which it drives in rotation.

2. Main transmission gearbox according to claim 1, characterized in that the two input pinions (2, 2') and the intermediate pinion or pinions (20, 20', 22, 22') of the coupling chain (19, 19') are cylindrical pinions with helical teeth.

3. Main transmission box according to one of claims 1 and 2, characterized in that the coupling chain (19) includes a single intermediate pinion (20) meshing with each of the two input pinions (2, 2') of this chain and disposed substantially therebetween.

4. Main transmission gearbox according to one of claims 1 and 2, characterized in that the coupling chain (19') includes several intermediate pinions (20', 22, 22') of which the one (20') which forms the drive pinion of the transmission shaft (21') to the antitorque rotor is coupled to one at least of the input pinions (2, 2') of the coupling chain (19') and at least one other intermediate pinion (22, 22') ensuring the drive (23, 23') of at least one accessory such as an alternator, a hydraulic pump or a rotor brake.

5. Main transmission gearbox according to claim 4, characterized in that the coupling chain (19') includes an uneven number of intermediate pinons (20', 22, 22') of which the one (20') which forms the drive pinion of the transmission shaft (21') to the anti-torque rotor is connected to each of the two input pinions (2, 2') of the coupling chain (19') by an equal number of intermediate pinions (22, 22') which are possibly in mesh with each other.

6. Main transmission gearbox according to one of claims 1 to 5, characterized in that one at least of the two transmission shafts flexible in torsion (3, 3') is provided with splines (4, 4', 5, 5') at each of its ends, the splines (4, 4') of one end being shifted angularly with respect to those (5, 5') at the other end.

7. Main transmission gearbox according to one of claims 1 to 6, characterized in that one at least of the two transmission shafts, flexible in torsion (3, 3'), includes a different number of splines (4, 4', 5, 5') at each end.

8. Main transmission gearbox according to one of claims 3 to 7, such as attached to claim 2, characterized in that one at least of the two input pinions with helical teeth (2, 2') of the coupling chain (19, 19') is adjustable by translation along its axis, so as to ensure the simultaneity of meshing of teeth on all the pinions of the coupling chain (19, 19').

9. Main transmission gearbox according to one of claims 1 to 8, characterized in that the common adding gearwheel (12') is integral in rotation with the drive shaft of the lift rotor and has helical cylindrical teeth cooperating with teeth of the same kind of the terminal pinions (11, 11')

10. Main transmission gearbox according to one of claims 1 to 8, characterized in that the common adding gearwheel (12) is integral in rotation with a second vertical transmission shaft (13) which is in its turn integral in rotation with a sun gear (15) of an epicylic gear chain forming an output reduction stage (14) which transmits the rotation of the torque to the drive shaft (18) of the lift rotor.

11. Main transmission gearbox according to one of claims 1 to 10, characterized in that each input shaft (1, 1') is coupled to the output shaft (24, 24') of the corresponding engine by means of a free wheel (25, 25').

_Fig. 1_

0 172 104

Fig. 2